# EUROPEAN PATENT APPLICATION

(11) **EP 1 422 504 A1**
(43) Date of publication of application: **26.05.2004**
(21) Application number: 02758838.3
(22) Date of filing: 12.08.2002
(51) Int. Cl.: G01F 23/38

(54) **LIQUID LEVEL SENSOR DEVICE**

(30) Priority: 28.08.2001 JP 2001257099
(71) Applicant: NIPPON SEIKI CO., LTD., Nagaoka-shi, Niigata 940-8580 (JP)
(72) Inventor: SATO, Koichi c/o Nippon Seiki Co., Ltd., Nagaoka-shi, Niigata 940-8580 (JP)
(74) Representative: Jackson, Richard Eric
(86) International application number: PCT/JP2002/008226
(87) International publication number: WO 2003/021207

(57) **Abstract**

A liquid level detecting apparatus in which an error due to a scatter of the temperature characteristics and sensitivity of magnetic sensors is held down is provided which has a float 5 floating on a liquid level, a magnetic member 7 adapted to be turned in accordance with variation of a position of the float 5 accompanied by the fluctuation of the liquid level, and magnetic sensors 8a, 8b adapted to output detection signals varying in accordance with a rotation of the magnetic member 7, the apparatus including two magnetic sensors 8a, 8b, a control unit 100 adapted to receive detection signals outputted from the two magnetic sensors 8a, 8b and compute a liquid quantity value on the basis of the detection signals, and a display unit 102 adapted to shown thereon a liquid level on the basis of the liquid quantity value computed by the control unit 100.

## Description

### Technical Field:

This invention relates to a liquid level detecting apparatus adapted to detect a level of a liquid by using a magnetic means provided in a liquid storage member, such as a fuel tank of a means of transport, for example, a vehicle.

### Background Art:

The known liquid level detecting apparatuses adapted to detect a level of a liquid fuel in a means of transport, especially, a vehicle include a liquid level detecting apparatus in which a float arm is connected to a float the position of which varies vertically in accordance with a residual quantity of the fuel, and in which a sliding contact point, which is moved in accordance with a movement of this float arm, is moved slidingly on a fixed contact point connected to a resistor, the position (liquid level of the fuel) of the float being thereby converted into an electric resistance value, which is then detected as an object liquid level.

Since this liquid level detecting apparatus is accompanied by the electric contact between the sliding contact and the fixed contact, the apparatus could not be used when the fuel was a conductive liquid.

In view of such an inconvenience, a non-contacting type liquid level detecting apparatus using a magnetic sensor including a magnetic resistance element and the like has been proposed (JP 8-94413-A) as a liquid level detecting apparatus capable of being substituted for the mentioned contacting type liquid level detecting apparatus.

Such a liquid level detecting apparatus using a magnetic sensor is, however, formed by providing one magnetic sensor in one magnetic circuit, and adapted to detect variations of magnetic fields in these magnetic circuits. Therefore, there is a fear of encountering a scatter of the sensitivity of the magnetic sensors due to the temperature characteristics thereof.

Under the circumstances, one of the objects of the present invention with respect to the problems of the related art example of the liquid level detecting apparatus is to provide a liquid level detecting apparatus in which an error due to a scatter of the temperature characteristics and sensitivity of the magnetic sensors is held down.

### Disclosure of the Invention:

The present invention relates to a liquid level detecting apparatus having a float 5 floating on a liquid level, a magnetic member 7 adapted to be turned in accordance with variation of the position of the float 5 accompanied by the fluctuation of the liquid level, and magnetic sensors 8a, 8b adapted to output detection signals varying in accordance with the rotation of the magnetic member 7, the apparatus including a control unit 100 adapted to receive detection signals outputted from the two magnetic sensors 8a, 8b and compute a value of a liquid quantity, and a display unit 102 adapted to show thereon a liquid level on the basis of a liquid quantity value computed by the control unit 100. Owing to this construction, a liquid level detecting apparatus in which a scatter of the temperature characteristics and sensitivity of magnetic sensors is held down can be provided.

The present invention is also provided with an output characteristic regulating unit so that the output characteristics of a detection signal from one magnetic sensor 8a out of the two magnetic sensors 8a, 8b agree with those of a detection signal from the other magnetic sensor 8b. Owing to this construction, a liquid level detecting apparatus capable of regulating outputs from the two magnetic sensors 8, 8b to an equal level, and holding down a scatter of the temperature characteristics and sensitivity of the magnetic sensors can be provided.

### Brief Description of the Drawings:

Fig. 1 is a front view of a first embodiment of the present invention;
Fig. 2 is a diagram of outputs from sensors in the same embodiment;
Fig. 3 is a construction diagram of the same embodiment;
Fig. 4 is a front view of a second embodiment of the present invention; and
Fig. 5 is a diagram of outputs from sensors in the same embodiment.

### Best Mode for Carrying Out the Invention:

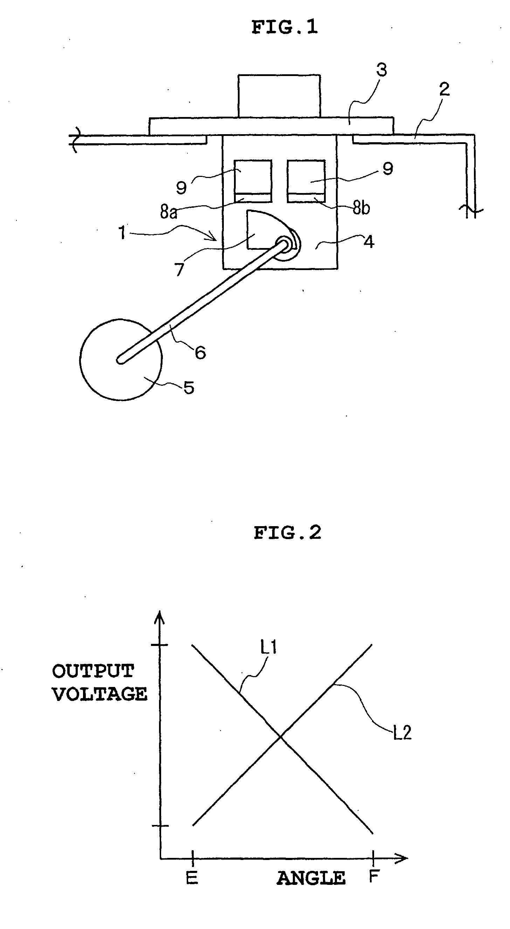

The first embodiment of the present invention will now be described on the basis of Fig. 1 to Fig. 3. A liquid level detecting apparatus 1 of the first embodiment is provided in a fuel tank 2 of a vehicle via a mounting member 3 which closes an opening of the fuel tank 2. The mounting member 3 is provided with a frame 4 of the liquid level detecting apparatus 1, and members constituting the liquid level detecting apparatus 1 are fixed to this frame 4.

The liquid level detecting apparatus 1 includes a float 5 floating on a level of a liquid fuel (not shown) stored in the fuel tank 2, a float arm 6 provided at one end thereof with this float 5 and supported rotatably at the other end thereof on the frame 4, a magnetic member 7 adapted to be turned in accordance with variation of the position of the float 5 accompanied by the fluctuation of the liquid level, two magnetic sensors 8a, 8b using a magnetism sensitive elements made of, for example, MR elements, adapted to detect displacement of the magnetic member 7 occurring due to the rotation thereof, and output a detection signal, and permanent magnets 9 used to give bias magnetic fields to the magnetic sensors 8a, 8b.

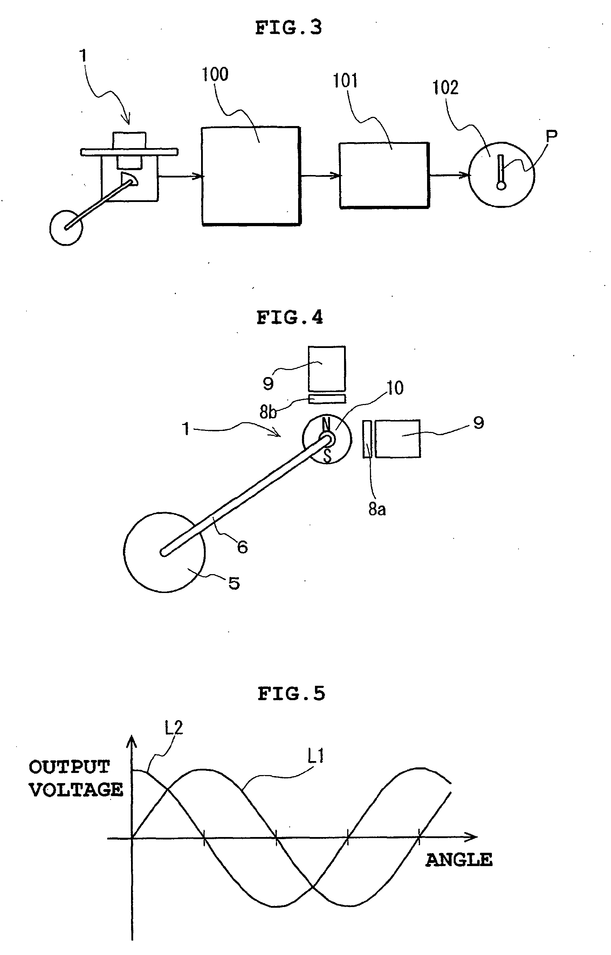

This embodiment is formed as shown in Fig. 3, so as to display a liquid level on the basis of detection signals detected by the magnetic sensors 8a, 8b. Referring to the drawing, a reference numeral 100 denotes a microcomputer as a control unit, 101 a driver adapted to output a predetermined voltage in accordance with a command signal from the microcomputer 100, and 102 a display unit made of, for example, a cross coil type gauge adapted to have a pointer P move angularly in accordance with a driving voltage output from the driver 101. The display unit 102 converts the detection signals from the magnetic sensors 8a, 8b into a driving signal corresponding to a liquid quantity through the microcomputer 100 and driver 101, deflects a pointer P of the display unit 102 at a predetermined angle on the basis of this driving signal, and thereby displays a liquid level in the fuel tank 2. Although the microcomputer 100 in this embodiment does not include the driver 101, the microcomputer 100 can be provided as a one-chip microcomputer including the function of the driver 101. Although the display unit 102 in this embodiment is a pointer-type display unit, the display unit 102 may be a digital type or bar graph type display unit.

The magnetic member 7 is rotated coaxially with the float arm 6 made of a metal or a synthetic resin, so as to vary a distance between the magnetic member 7 and the magnetic sensors 8a, 8b.

The magnetic sensors 8a, 8b are disposed between the magnetic member 7 and permanent magnet 9, and, when the magnetic member 7 is turned, a density of a magnetic flux generated by the permanent magnet 9 varies. On the basis of the variation of this magnetic flux density, resistance values of the magnetic sensors 8a, 8b vary, and the variation of the resistance values is outputted as a detection signal into the microcomputer 100. The variations of the output voltages from the magnetic sensors 8a, 8b in accordance with variation of the float 5 are shown in Fig. 2. In this embodiment, the characteristics of outputs from the magnetic sensors 8a, 8b become curves of a trigonometric function, and the portions of the characteristics which become straight lines are applied. Referring to Fig. 2, a reference letter L1 represents an output from the magnetic sensor 8a, and L2 an output from the magnetic sensor 8b. As shown in the drawing, the level of an output signal from the magnetic sensor 8a is set so that this level becomes lower as a liquid quantity in the fuel tank 2 comes closer to that of a full tank (F) condition, while the level of an output signal from the magnetic sensor 8b is set so that this level becomes lower as a liquid quantity in the fuel tank 2 comes closer to that of an empty tank (E) condition.

The signals detected by the magnetic sensors 8a, 8b are inputted into the microcomputer 100, which subjects these detection signals from the magnetic sensors 8a, 8b to comparative computation in accordance with a predetermined program to determine a liquid quantity value corresponding to the position of the float 5. A control signal for deflecting the pointer P at a predetermined angle in accordance with this liquid quantity value is outputted into the driver 101, which deflects the pointer P at a predetermined angle on the basis of the mentioned control signal to display a quantity of the fuel in the fuel tank 2.

Thus, in this embodiment, a liquid level is determined by comparing outputs from two magnetic sensors with each other, so that a liquid level detecting apparatus in which an error due to a scatter of temperature characteristics and sensitivity of the magnetic sensors is held down can be provided.

Next, a second embodiment of the present invention will now be described by using Figs. 4 and 5. The parts of this embodiment identical with and equivalent to those of the first embodiment will be designated by the same reference numerals, and detailed description thereof will be omitted.

In the second embodiment, a permanent magnet 10 having a pair of NS poles is provided instead of the magnetic member 7 in the first embodiment in which the magnetic member 7 turns with the float arm 6 at the same angle and in the same direction, and magnetic sensors 8a, 8b in the second embodiment are provided in positions staggered from each other at right angles with respect to the permanent magnet 10.

The magnetic flux density with respect to the magnetic sensors 8a, 8b is varied by turning the permanent magnet 10, and variation of output voltages from the magnetic sensors 8a, 8b is as shown in Fig. 5. In this embodiment, outputs of detection signals from the magnetic sensors 8a, 8b become curves of a trigonometric function. Referring to Fig. 5, a reference letter L1 denotes an output of a detection signal from the magnetic sensor 8a, and L2 an output of a detection signal from the magnetic sensor 8b.

In the same manner as in the first embodiment, a control unit 100 of a microcomputer determines a liquid quantity value to be displayed, on the basis of the signals detected by the magnetic sensors 8a, 8b. On the basis of this liquid quantity value, a driver 101 has a pointer P deflect at a predetermined angle on a display unit 102 made of a cross coil type gauge, and displays a quantity of a fuel in a fuel tank 2.

Therefore, since a liquid level value is determined by subjecting outputs from two magnetic sensors to comparative computation in the same manner as in the first embodiment, a liquid level detecting apparatus in which an error due to a scatter of the temperature characteristics and sensitivity of the magnetic sensors is held down can be provided.

When the output characteristics of detection signals from the two magnetic sensors 8a, 8b are different in each of the embodiments, there is the possibility that an error occurs in the results of computation carried out in the microcomputer 100. Therefore, in order that the output characteristics of the two magnetic sensors 8a, 8b become substantially equal to each other, the magnetic sensor 8b is provided with an output characteristic regulating unit (not shown) for the purpose of setting the output characteristics of a detection signal from one magnetic sensor, for example, the magnetic sensor 8b out of the two magnetic sensors 8a, 8b in agreement with those of a detection signal from the other magnetic sensor 8a. The output characteristic regulating unit may be made of a resistor trimming member, or a variable resistor may be used therefor. Since the embodiments are formed in this manner, a liquid level detecting apparatus capable of setting the output characteristics of the two magnetic sensors 8a, 8b equal to each other with a scatter of the temperature characteristics and sensitivity thereof held down can be provided.

Although MR elements are used as the magnetic sensors 8a, 8b in each of the embodiments, for example, Hall elements may also be used.

According to the present invention described above, a liquid level detecting apparatus capable of achieving the desired objects with an error due to a scatter of the temperature characteristics and sensitivity of the magnetic sensors held down can be provided.

### Industrial Applicability:

The present invention can be utilized as a liquid level detecting apparatus for detecting a liquid level by using magnetic means provided in a liquid storage member, such as a fuel tank in a means of transport, for example, a vehicle.

## Claims

1. A liquid level detecting apparatus having a float floating on a liquid level, a magnetic member or a magnet adapted to be turned in accordance with variation of a position of the float accompanied by the fluctuation of the liquid level, and magnetic sensors adapted to output detection signals which vary in accordance with rotations of the magnetic member or the magnet, the apparatus including:
a control unit adapted to receive detection signals outputted from the magnetic sensors, which are dually provided, and compute a liquid quantity value on the basis of the detection signals, and a display unit adapted to show thereon a liquid level on the basis of the liquid quantity value computed by the control unit.

2. A liquid level detecting apparatus according to Claim 1, wherein the apparatus is further provided with an output characteristic regulating unit so that the output characteristics of a detection signal from one magnetic sensor out of the two magnetic sensors become in agreement with those of a detection signal from the other.
